# EUROPÄISCHE PATENTSCHRIFT

(11) **EP 0 436 546 B1**
(45) Veröffentlichungstag und Bekanntmachung des Hinweises auf die Patenterteilung: **13.10.1993**
(21) Anmeldenummer: 89906758.1
(22) Anmeldetag: 24.05.1989
(51) Int. Cl.: B05B 12/08, B05B 7/14, G01F 1/66, G01F 25/00, G01N 21/27, B41F 23/06

(54) **BESTÄUBUNGSGERÄT**
DUSTING APPARATUS
APPAREIL DE SAUPOUDRAGE

(30) Priorität: 06.06.1988 DE 3819203
(43) Veröffentlichungstag der Anmeldung: 17.07.1991
(73) Patentinhaber: KLASCHKA GMBH & CO., D-75233 Tiefenbronn-Lehningen (DE); PLATSCH, Hans G., 70565 Stuttgart (DE)
(72) Erfinder: PLATSCH, Hans, G., D-7000 Stuttgart 80 (DE)
(74) Vertreter: Ostertag, Reinhard
(86) Internationale Anmeldenummer: EP8900571
(87) Internationale Veröffentlichungsnummer: WO8911917

(56) Entgegenhaltungen:
- EP-A- 0 047 049
- CH-A- 567 721
- DE-A- 2 637 875

## Beschreibung

Die Erfindung betrifft ein Bestäubungsgerät gemäß dem Oberbegriff des Anspruches 1.

Derartige Bestäubungsgeräte, wie sie z.B. in der DE-A-26 37 875 beschrieben sind, finden in Druckmaschinen Verwendung, um frisch bedruckte Bögen oder Endlosbahnen mit einem dünnen Staubüberzug zu versehen, welcher ein Zusammenkleben der Bogen verhindert. Gibt das Bestäubungsgerät zu wenig Puder ab, so wird dieses Ziel nicht zuverlässig erreicht, wird zu viel Puder auf die Druckerzeugnisse aufgebracht, ergibt dies einen für den Benutzer unangenehmen Griff des Erzeugnisses und erhöht die Kosten für die Bestäubung. Zuweilen ist eine zu starke Puderbeschicht auch bei einer späteren maschinellen Weiterverarbeitung der Druckerzeugnisse nachteilig, da keine reproduzierbaren Reibungsverhältnisse vorliegen. Bei einem Bestäubungsgerät nach der DE-A-26 37 875 erfolgt die Ermittlung des Puderbedarfs verhältnismäßig grob durch einen Fühler, der ein zur Arbeitsgeschwindigkeit der Druckmaschine proportionales Signal bereitstellt.

Bisher erfolgte die eigentliche Kontrolle der Dicke der vom Bestäubungsgerät auf den Druckerzeugnissen aufgebrachten Puderschicht dadurch, daß man einen schwarzen Kontrollbogen durch das Bestäubungsgerät laufen ließ und die Weißfärbung auf dem Bogen optisch kontrollierte. Diese Art der Kontrolle ist aber offensichtlich im laufenden Betrieb nicht möglich, so daß hier eine sorgfältige Überwachung durch das Bedienungspersonal notwendig war, um sowohl einen Abmangel als auch einen Überschuß an Puder festzustellen, der sich aus Änderungen in den Pudereigenschaften (z.B. Erhöhung des Feuchtigkeitsgehaltes) und der Justierung des Bestäubungsgerätes im Langzeiteinsatz ergab.

Durch die vorliegende Erfindung soll daher ein Bestäubungsgerät gemäß dem Oberbegriff des Anspruches 1 so weitergebildet werden, daß auch während der Produktion eine gleichförmige Qualität der auf den Druckerzeugnissen aufgebrachten Puderschichten gewährleistet ist.

Diese Aufgabe ist erfindungsgemäß gelöst durch ein Bestäubungsgerät gemäß Anspruch 1.

Bei dem erfindungsgemäßen Bestäubungsgerät wird die Dichte eines frei von der Dosiereinrichtung in die Vernebelungseinrichtung fallenden Puderstromes gemessen. Diese Dichte ist insgesamt noch verhältnismäßig groß, so daß man unter Verwendung wenig empfindlicher Meßeinrichtungen eine große Änderung des Meßsignales erhält. Würde man Dichteänderungen direkt im erzeugten Nebel messen, welcher durch Zerstäuben des Puders in einem Trägergas erhalten wird, müßte man sehr empfindliche Meßeinrichtungen verwenden, die darüber hinaus noch sehr empfindlich auf Störeinflüsse reagieren.

Da bei dem erfindungsgemäßen Bestäubungsgerät in regelmäßigen Abständen eine Relativbewegung zwischen dem frei fallenden Puderstrom und der Meßschranke herbeigeführt wird, kann man das Ausgangssignal der Meßschranke zu denjenigen Zeitpunkten, in welchen diese nicht vom Puderstrom geschnitten wird, dazu verwenden, durch Verunreinigungen oder Alterung bedingte Störeinflüsse zu kompensieren. Es ist somit insbesondere nicht notwendig, in das Bestäubungsgerät eine Reinigungseinrichtung einzubauen, welche laufend oder intermittierend die Meßstrecke von Verunreinigungen freihält. Auch Temperatureinflüsse werden auf diese Weise ausgeräumt.

Es sind an sich Geräte zur Bestimmung der Schwebeteilchenkonzentration in Gasen bekannt, bei welchen die optischen Teile der Meßschranke in regelmäßigen Abständen in einen Referenzweg gestellt werden, der von Schwebeteilchen frei ist. Beispiele hierfür sind die EP-A-00 47 049 und die CH-A-567 721. Bei diesen bekannten Meßgeräten zur Bestimmung des Schwebstoffgehaltes wird durch einen Elektromotor in regelmäßigen Abständen in die Meßschranke entweder ein geschlossener Lichtweg oder ein von einem reinen Gas durchströmtes Rohr gestellt bzw. die Meßschranke entsprechend verlagert. Wegen der insgesamt nur geringen Schwankungen der optischen Dichte benötigt man hier eine präzise Auswerteelektronik. Erfindungsgemäß wird dagegen die Dichte des von der Dosiereinrichtung frei in die Vernebelungseinrichtung fallenden Puderstromes gemessen.

Vorteilhafte Weiterbildungen der Erfindung sind in Unteransprüchen angegeben.

Erzeugt man die Relativbewegung zwischen Meßschranke und Puderstrom gemäß Anspruch 2, so erfolgt dies mit sehr einfachen und störungsunanfälligen mechanischen Mitteln. Ein flexibler Schlauch stört auch nur wenig den Fluß des Puderstromes, da in Strömungsrichtung durchweg glatte Übergänge vorliegen.

Die Weiterbildung der Erfindung gemäß Anspruch 3 ist im Hinblick auf ein zuverlässiges und einfaches Auslenken des freien Endes des den Puderstrom führenden Schlauchstückes gesteuert durch eine Programmsteuerung von Vorteil.

Mit der Weiterbildung der Erfindung gemäß Anspruch 4 wird verhindert, daß sich Puder in der Nachbarschaft der Meßstrecke an Schultern oder Absätzen des Gerätegehäuses ansammelt.

Mit der Weiterbildung der Erfindung gemäß Anspruch 5 wird erreicht, daß das Fließen des Puderstromes über die zur Geräteachse zurückführende Umlenkfläche besonders schonend und gleichförmig erfolgt, was wiederum im Hinblick auf das Vermeiden von Puderansammlungen und Wirbelbildung vor dem Eintreten des Puderstromes in die Vernebelungseinrichtung von Vorteil ist. Ein gleichförmiges laminares Eintreten des Puderstromes in die Vernebelungseinrichtung ist aber seinerseits wieder im Hinblick auf eine homogene gleichbleibende Nebelbildung von Vorteil.

Bei einem Bestäubungsgerät gemäß Anspruch 8 hat man für das Fließen des Puderstromes stets exakt die gleichen Verhältnisse, egal ob der Puderstrom die Meßschranke gerade schneidet oder aus dieser zur Neukalibrierung der Meßeinrichtung gerade herausgenommen ist.

Die Weiterbildung der Erfindung gemäß Anspruch 9 gestattet auf einfache Weise das starr synchrone Bewegen von Sender und Empfänger der Meßschranke ohne Behinderung des Puderstromes.

Mit der Weiterbildung der Erfindung gemäß Anspruch 11 wird eine besonders gleichförmige Nebelerzeugung gewährleistet.

Auch die Weiterbildung der Erfindung gemäß Anspruch 12 ist im Hinblick auf eine gleichförmige Nebelbildung und im Hinblick auf ein gleichförmiges Hereinsaugen des Puderstromes in die Vernebelungseinrichtung von Vorteil.

Gemäß Anspruch 13 kann man die Strömungsverhältnisse in, stromauf und stromab der Vernebelungseinrichtung noch gemäß den jeweiligen speziellen Eigenschaften des verwendeten Puders und gemäß der jeweils gewünschten Nebel-Strömungsgeschwindigkeit optimieren.

Die Weiterbildung der Erfindung gemäß Anspruch 14 gestattet eine gleichförmige Verteilung des erzeugten Nebels auf eine Mehrzahl von Abgabedüsen, die transversal verteilt über dem Druckerzeugnis angeordnet sind.

Mit den Weiterbildungen der Erfindung gemäß Anspruch 16 und 17 wird erreicht, daß die Empfindlichkeit der Meßeinrichtung insgesamt im wesentlichen konstant gehalten wird. Damit bleibt die Genauigkeit der Einhaltung der Soll-Nebelzusammensetzung auch über sehr lange Zeitspannen hinweg erhalten.

Nachstehend wird die Erfindung anhand von Ausführungsbeispielen unter Bezugnahme auf die Zeichnung näher erläutert. In dieser zeigen:
- Figur 1:: eine schematische seitliche Ansicht eines Bestäubungsgerätes zur Verwendung in einer Druckmaschine, teilweise axial geschnitten;
- Figur 2:: einen axialen Schnitt durch ein praktisches Ausführungsbeispiel einer Untereinheit des in Figur 1 gezeigten Bestäubungsgerätes, in welcher der Puder vernebelt wird, die Dichte des zu vernebelnden Puderstromes gemessen wird und der erzeugte Nebel gleichförmig auf verschiedene Arbeitsleitungen verteilt wird;
- Figur 3:: einen horizontalen Schnitt durch eine abgewandelte Meßeinrichtung zur Bestimmung des der Vernebelungseinrichtung zugeführten Puderstromes;
- Figur 4:: einen vertikalen Schnitt durch die Meßeinrichtung nach Figur 3 längs der dortigen Schnittlinie IV-IV; und
- Figur 5:: ein Blockschaltbild einer Mengen-Regelung des Bestäubungsgerätes nach Figur 1.

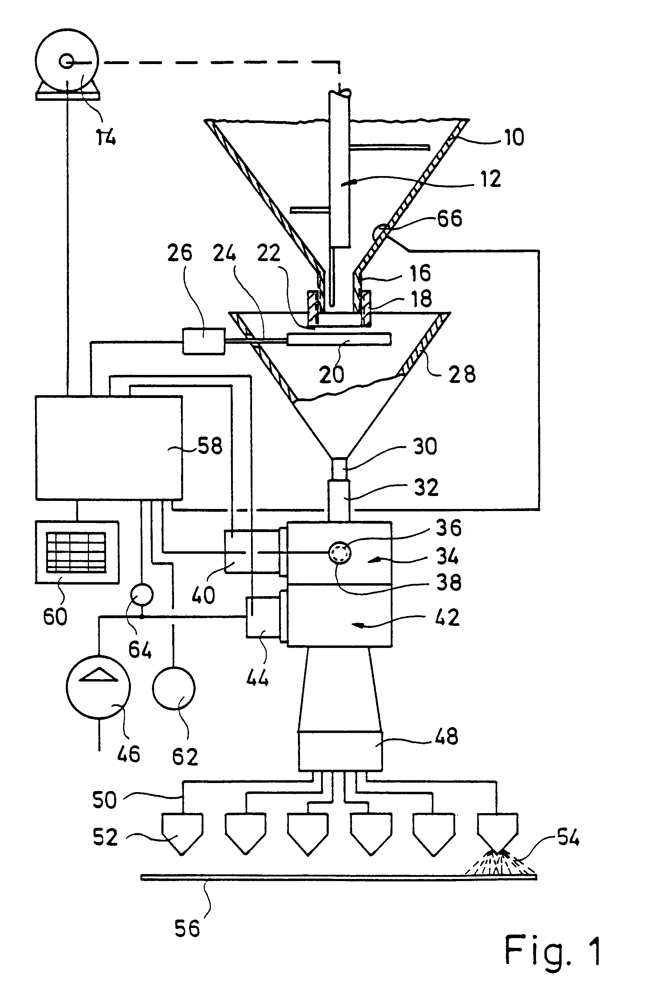

In Figur 1 ist mit 10 ein Vorratsbehälter bezeichnet, in den ein auf Druckerzeugnissen in Form einer dünnen Staubschicht aufzubringendes Pudermaterial eingefüllt ist, welches in Figur 1 nicht wiedergegeben ist. Gängige derartige Pudermaterialien, die ein Zusammenkleben frisch bedruckter Druckerzeugnisse verhindern, sind z.B. Maisstärke, CaCO₃ und Zucker mit Teilchengrößen von 10 bis 50 µ, in der Regel zwischen 15 und 20 µ.

Das Pudermaterial wird im Vorratsbehälter 10 durch einen insgesamt mit 12 bezeichneten Rührarm in fließfähigem Zustand gehalten. Der Rührarm 12 wird von einem Elektromotor 14 angetrieben.

Auf einen am unteren Ende des Vorratsbehälters 10 liegenden Abgabestutzen 16 ist eine Dosierhülse 18 aufgeschraubt. Diese begrenzt zusammen mit einer darunter liegenden horizontalen Dosierplatte 20 einen Dosierspalt 22, dessen axiale Abmessung durch Verdrehen der Dosierhülse 18 eingestellt werden kann.

Die Dosierplatte 22 ist über eine Stange 24 mit einem Schwingantrieb 26 verbunden und wird durch letzten mit einer Frequenz von typischerweise 250 Hz in horizontaler Richtung hin- und herbewegt, wobei sich die Amplitude dieser Bewegung einstellen läßt. Über die Amplitude der Bewegung der Dosierplatte 22 läßt sich die über die Größe des Dosierspaltes 22 vorgegebene grobe Einstellung des aus dem Vorratsbehälter 10 abgezogenen Puderstromes noch fein einjustieren.

Der über die Ränder der Dosierplatte 20 herabrieselnde Puderstrom wird von einem Trichter 28 aufgefangen, der am unteren Ende einen Abgabestutzen 30 aufweist. Auf letzteren ist das obere Ende eines flexiblen Schlauches 32 aufgesetzt, der in eine insgesamt mit 34 bezeichnete Meßkammer führt. In der letzteren fällt der über den Schlauch 32 erhaltene Puderstrom frei nach unten, wobei er eine Meßstrecke durchfällt, die durch eine Lichtquelle 36, z.B. eine Leuchtdiode, sowie einen Lichtdetektor 38, z.B. eine Fotodiode, gebildet ist.

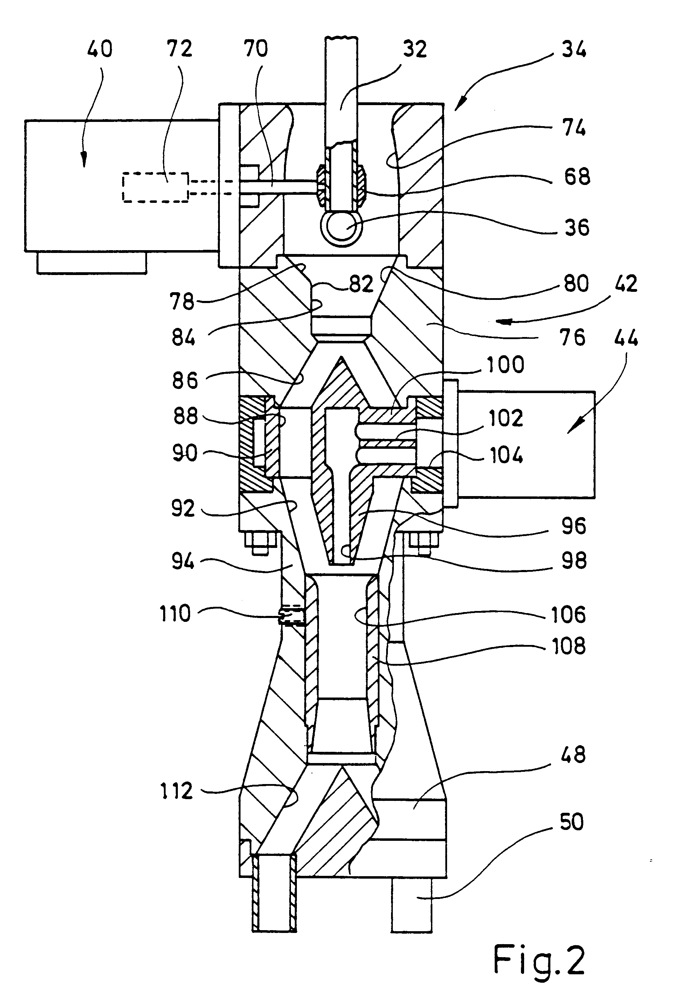

Das freie untere Ende des Schlauches 32 kann im Inneren der Meßkammer 34 seitlich zur Verbindungslinie zwischen Lichtquelle 36 und Lichtdetektor 38 ausgelenkt werden, wie später unter Bezugnahme auf Figur 2 noch genauer erläutert wird, und zur Erzeugung dieser Bewegung ist auf die Meßkammer 34 ein Elektromagnet 40 aufgesetzt.

Der aus der Meßkammer 34 nach unten austretende Puderstrom gelangt in eine insgesamt mit 42 bezeichnete Vernebelungskammer, der über ein Magnetventil 44 ein Druckluftstrom zugeführt wird. Einzelheiten der Vernebelungskammer 42 werden ebenfalls später noch genauer beschrieben.

Das Magnetventil 44 ist mit dem Ausgang eines Kompressors 46 verbunden.

Unterhalb der Vernebelungskammer 42 liegt ein Verteilergehäuse 48, in welchem der aus der Druckluft und dem Puderstrom erzeugte dünne Nebel auf eine Vielzahl von Arbeitsleitungen 50 verteilt wird, die zu senkrecht zur Zeichenebene von Figur 1 verlaufenden Düsenleisten 52 führen. Diese geben Nebelstrahlen 54 im wesentlichen homogen auf die Oberseite eines frischen Druckerzeugnisses.

Die Erregung des Elektromotors 14, des Schwingantriebes 26, des Elektromagneten 40 und des Magnetventiles 44 besorgt eine insgesamt mit 58 bezeichnete numerische Programmsteuerung. Dieser können über ein Eingabefeld 60 Grundparameter für das jeweilige Arbeiten eingegeben werden, insbesondere Länge und Breite der zu bestäubenden Bogen, gewünschte Dichte des zur Oberseite des Druckerzeugnisses gerichteten Nebels, Grundeigenschaften des zu zerstäubenden Pudermateriales, Bewegungsgeschwindigkeit des Druckerzeugnisses usw.

Die Programmsteuerung 58 arbeitet ferner mit einem Bogendetektor 62 zusammen, der anspricht, wenn die Vorderkante des Druckerzeugnisses die Düsenleisten 52 erreicht und abfällt, wenn die Hinterkante des Druckerzeugnisses die Düsenleisten 52 verlassen hat. Die Programmsteuerung 58 ist ferner an den Ausgang eines Druckfühlers 64 angeschlossen, der den Förderdruck des Kompressors 46 überwacht. Weiter erhält die Programmsteuerung 58 das Ausgangssignal eines Niveaufühlers 66, der beim unteren Ende des Vorratsbehälters 10 angebracht ist und anspricht, wenn für weiteres Arbeiten des Bestäubungsgerätes nicht mehr ausreichend Pudermaterial zur Verfügung steht.

Zur Einregelung eines konstanten Puderstromes in die Vernebelungskammer ist die Programmsteuerung 58 an den Ausgang des Lichtdetektors 38 angeschlossen und stellt die Schwingungsamplitude und/oder Schwingungsfrequenz der Dosierplatte 20 so ein, daß in der durch die Lichtquelle 36 und den Lichtdetektor 38 gebildeten Meßstrecke stets die gleiche optische Dichte, damit auch die gleiche Materiedichte des Puderstromes erhalten bleibt.

Wie aus Figur 2 ersichtlich, ist das freie untere Ende des Schlauches 32 in einem Ring 68 radial festgelegt, der seinerseits über einen Stößel 70 mit dem Anker 72 des Elektromagneten 40 verbunden ist.

Die Meßkammer 34 hat eine großen Durchmesser aufweisende vertikale Durchgangsbohrung 74, so daß der Ring 68 so weit in seitlicher Richtung bewegbar ist, daß der vom unteren Ende des Schlauches 32 abgegebene Puderstrom die durch die Lichtquelle 36 und den Lichtdetektor 38 gebildete Meßlichtschranke seitlich umgeht.

Ein Kopfstück 76 der Vernebelungskammer 42 hat am oberen Ende einen Puder-Auffangtrichter. Dieser besteht aus zwei sich jeweils über einen Winkel von 180° erstreckenden Trichterabschnitten, nämlich einem ersten Trichterabschnitt 78, dessen Wand unter einem Winkel von 45° zur Geräteachse angestellt ist, sowie einem steiler verlaufenden, unter einem Winkel von 25° zur Geräteachse angestellten zweiten Trichterabschnitt 80.

Die beiden Trichterabschnitte 78, 80 führen unten zu einem gemeinsamen Abgabequerschnitt, wozu der Trichterabschnitt 78 über einen abgerundeten übergangsabschnitt 82 mit einem axialen Kanalstück 84 verbunden ist.

Von der unteren Stirnfläche her ist in das Kopfstück 76 ein sich nach unten kegelförmig erweiternder Trichter 86 eingestochen. Dieser führt zu einer zylindrischen Durchgangsbohrung 88, die in einen mittleren Gehäuseteil 90 der Vernebelungskammer 42 vorgesehen ist. An die Durchgangsbohrung 88 schließt sich ein wieder konisch verjüngender Trichter 92 an, der im oberen Ende eines Fußteiles 94 der Vernebelungskammer 42 ausgebildet ist.

In der durch die Gehäuseteile 76, 90 und 94 begrenzte Kammer ist unter allseitig gleichem radialem Abstand von der Durchgangsbohrung 88 sowie den Trichtern 86, 92 ein insgesamt mit 96 bezeichneter Düsenkörper angeordnet, der einen mittigen, nach unten offenen Abgabekanal für Druckluft aufweist. Dieser steht über in einem radialen Tragarm 100 vorgesehene Kanäle 102 mit einer Druckluft-Anschlußöffnung 104 in Verbindung, an welche das Magnetventil 44 angeschlossen ist.

In eine sich an den Trichter 92 anschließende zylindrische Gehäusebohrung 106 des Fußteiles 94 ist eine Venturihülse 108 eingesetzt. Sie kann in unterschiedlicher axialer Stellung durch eine Madenschraube 110 fixiert werden.

An das stromabseitige Ende der Venturihülse 108 schließt sich das Verteilergehäuse 48 an, in welchem ausgehend vom gemeinsamen Querschnitt der Venturihülse 108 verschiedene Verteilerkanäle 112 ausgebildet sind, die zu den verschiedenen Arbeitsleitungen 50 führen.

Das soweit beschriebene Bestäubungsgerät arbeitet grob gesprochen so, daß die Dosierplatte 20 einen durch ihre Schwingungsamplitude und ihre Schwingungsfrequenz einstellbaren Puderstrom in den Trichter 28 abgibt. Dieser wird über den Schlauch 32 normalerweise zu einer über der durch die Lichtquelle 36 und den Lichtdetektor 38 gebildeten Meßlichtschranke liegenden Stelle geführt und dort freigegeben, so daß der Puderstrom im freien Fall die Meßlichtschranke durchquert. Das Ausgangssignal des Lichtdetektors 38 gibt nun ein Maß für die Dichte des Puderstromes, damit für die pro Zeiteinheit vernebelte Pudermenge. Der gemessene Puderstrom gelangt nun in die Vernebelungskammer 42 und wird dort mit dem über das Magnetventil 44 zugeführten Druckluftstrom innig und gleichförmig vermischt, wodurch ein sehr dünner homogener Nebel entsteht.

Da sich das Arbeitsverhalten der durch Lichtquelle 36 und Lichtdetektor 38 gebildeten Meßlichtschranke im Laufe der Zeit durch Absetzen von Puder und Alterung ändert, wird der Schlauch 32 in Abständen von etwa 10 Sekunden durch den Elektromagneten 40 seitlich so weit ausgelenkt, daß der Puderstrom vollständig an der Meßlichtschranke vorbeiläuft. Das dann erhaltene Ausgangssignal der Meßlichtschranke ist ein Maß für die Verschmutzung und Alterung der Meßlichtschranke sowie für weitere Störeinflüsse und kann so zur Kompensation der entsprechenden Meßfehler verwendet werden, wie später noch genauer beschrieben wird.

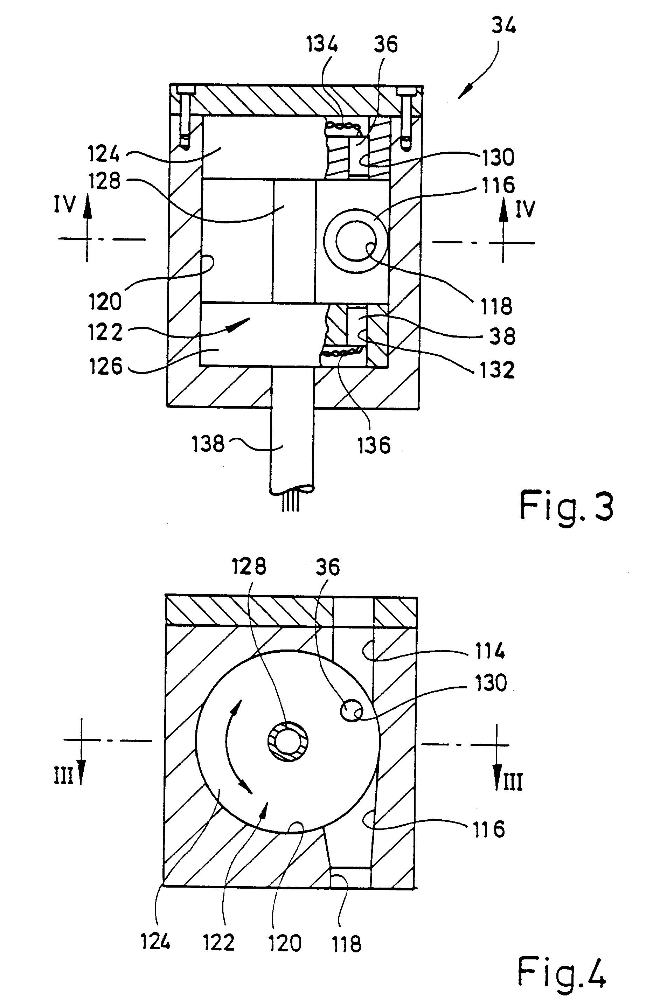

Die Figuren 3 und 4 zeigen eine abgewandelte Meßkammer 34. In ihrem Gehäuse ist ein Einlaßkanal 14 für den Puderstrom und ein bei 116 trichterförmig aufgeweiteter Auslaßkanal 118 für den Puderstrom vorgesehen. Diese beiden fluchtenden Kanäle schneiden eine transversale versetzte Gehäusebohrung 120, in der ein ähnlich wie eine Fadenrolle ausgebildeter Lichtschrankenträger 122 mit zwei Flanschteilen 124, 126 und einem diese verbindenden hohlen Nabenteil 128 drehbar gelagert ist. Die Flanschteile 124, 126 haben Bohrungen 130, 132 zur Aufnahme der Lichtquelle 36 bzw. des Lichtdetektors 38.

Anschlußkabel 134, 136 für die Lichtquelle 36 und den Lichtdetektor 38 sind durch das hohle Nabenteil 128 und eine sich hieran anschließende Hohlwelle 138 hindurchgeführt. Die letztere wird von einem nicht näher gezeigten Motor um größenordnungsmäßig 45° hin- und herbewegt, so daß die Lichtquelle 36 und der Lichtdetektor 38 aus einer den Weg des Puderstromes voll schneidenden Stellung (in der Zeichnung wiedergegeben) in eine seitlich außerhalb des Weges des Puderstromes liegende Referenzstellung bewegbar ist. In dieser letztgenannten Stellung wird das Ausgangssignal des Lichtdetektors 38 wieder zur Kompensierung von verunreinigungs- oder alterungsbedingten Meßfehlern verwendet.

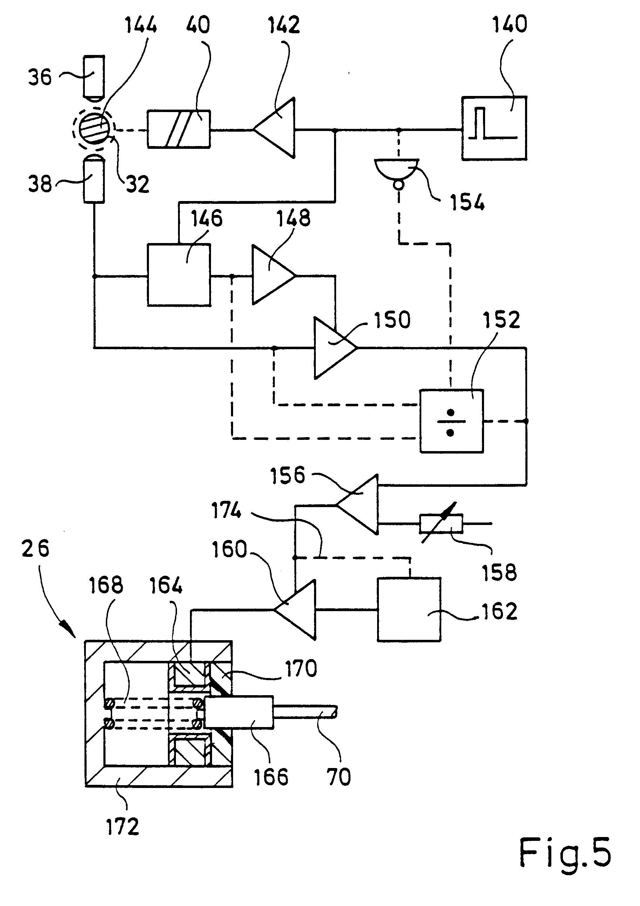

Figur 5 zeigt im oberen Teil die Ansteuerung des Elektromagneten 40 durch einen freilaufenden Taktgeber 140 und einen Leistungsverstärker 142. Der Taktgeber 140 stellt schmale Impulse mit einer Frequenz von etwa 0,1 Hz bereit, so daß alle 10 Sekunden der Elektromagnet 40 kurz anzieht und den Schlauch 32 und damit den im Querschnitt in Figur 5 bei 144 gezeigten Puderstrom aus der durch die Lichtquelle 36 und den Lichtdetektor 38 vorgebenen Meßlichtschranke bewegt.

Durch das Ausgangssignal des Taktgebers 140 wird ferner die Steuerklemme eines Signalspeichers 146 beaufschlagt, der an den Ausgang des Lichtdetektors 38 angeschlossen wird. Damit wird das Ausgangssignal des Lichtdetektors 38 zu denjenigen Zeitpunkten in den Signalspeicher 146 eingelesen, zu denen der Puderstrom 144 an der Meßlichtschranke vorbeiläuft.

Das im Signalspeicher 146 gespeicherte Signal dient über einen Umkehrverstärker 148 zur Beaufschlagung der Verstärkungs-Steuerklemme eines Verstärkers 150 mit steuerbarem Verstärkungsfaktor. Der Eingang des Verstärkers 150 erhält das Ausgangssignal des Lichtdetektors 38.

Man erhält so am Ausgang des Verstärkers 150 ein bezüglich Störeinflüssen korrigiertes Puderstromsignal. Ein solches läßt sich alternativ gemäß der in Figur 5 gestrichtelt eingezeichneten Variante erzeugen:

Ein Divisionskreis 152 ist an einer Aktivierungsklemme über einen Inverter 154 mit dem Ausgangssignal des Taktgebers 140 beaufschlagt und arbeitet somit immer dann, wenn der Puderstrom 144 die Meßlichtschranke durchsetzt. Der Divisionskreis 152 teilt das am Ausgang des Lichtdetektors 38 bereitgestellte Meßsignal durch das am Ausgang des Signalspeichers 146 bereitgestellte Referenzsignal, so daß man an seinem Ausgang insgesamt ein bezüglich Verunreinigungen, Alterungserscheinungen und sonstiger Störeinflüsse bereinigtes Puderstromsignal erhält.

Mit letzterem ist der eine Eingang eines Differenzverstärkers 156 beaufschlagt, der an seinem zweiten Eingang mit einem dem Soll-Dichtewert des Puderstromes und damit letztlich auch der Solldichte des erzeugten Nebels zugeordneten Referenzsignal beaufschlagt ist, welches beim hier betrachteten Ausführungsbeispiel von einem einstellbaren Widerstand 158 bereitgestellt wird.

Das Ausgangssignal des Differenzverstärkers 156 wird auf die Verstärkungs-Steuerklemme eines Verstärkers 160 mit steuerbarem Verstärkungsfaktor gegeben. Dessen Eingang ist mit dem Ausgang eines Sinus-Oszillators 162 verbunden, der normalerweise mit einer Frequenz von etwa 50 Hz arbeitet.

Durch das Ausgangssignal des Verstärkers 160 wird eine Spule 164 gespeist, die zusammen mit einem mit der Stange 24 verbundenen Anker 166 sowie einer diesen vorspannenden Schraubendruckfeder 168 den Schwingantrieb 26 bildet. Die Lagerung des Ankers 166 in radialer Richtung kann z.B. eine aus Gleitlagermaterial hergestellte Stirnplatte 170 eines Gehäuses 172 des Schwingantriebes 26 besorgen.

Man erkennt, daß die in Figur 5 gezeigte Regelschaltung insgesamt so arbeitet, daß sie bei zunehmender optischer Dichte des Puderstromes 144 die Amplitude des Schwingantriebes 26 herabsetzt, bei abnehmender Dichte des Puderstromes 144 die Amplitude des Schwingantriebes 26 vergrößert. Auf diese Weise wird die Dichte des Puderstromes 144 auf dem gewünschten, durch Einstellung des Widerstandes 158 vorgegebenen Sollwert gehalten.

Da das Arbeiten der Dosierplatte 20 auch von der Arbeitsfrequenz des Schwingantriebes 26 abhängt (Trägheitseffekte im auf der Dosierplatte 20 liegenden Pudervolumen), kann man die Amplitudenregelung, die soeben beschrieben wurde, ganz oder teilweise auch durch eine Regelung auf Frequenzbasis ersetzen, wie in Figur 5 durch die gestrichelte Linie 174 angedeutet.

Man erkennt, daß man auf die oben beschriebne Art und Weise unter Verwendung eines einfachen, keine hohen Präzisionsansprüche erfüllenden Lichtdetektors und einer einfachen Lichtquelle die Dichte des erzeugten Nebels sehr genau einjustieren kann. Da in dem gesamten Bestäubungsgerät der Förderweg des Puders vertikal verläuft und der gesamte Förderweg frei von Schultern und Kanten ist, besteht auch keine Gefahr der Bildung von Ablagerungen.

## Patentansprüche

1. Bestäubungsgerät mit einem Vorratsbehälter (10) für zu zerstäubenden fein gemahlene Puder, mit einer steuerbaren Dosiereinrichtung (18-26), welche einen Puderstrom vorgegebener Größe aus dem Vorratsbehälter (10) austrägt, mit einem Puderbedarfsfühler, dessen Ausgangssignal zur Ansteuerung der Dosiereinrichtung (18-26) verwendet wird, mit einer Vernebelungseinrichtung (42), welche die feinen Partikel des Puderstromes gleichförmig in einem gasförmigen Trägerstrom verteilt, und mit Düsen (2) zur Abgabe des so erzeugten Nebels gegen die zu bestäubenden Objekte (56), dadurch gekennzeichnet, daß der Puderbedarfsfühler durch eine Meßschranke (36, 38), insbesondere eine in Transmission arbeitende Lichtschranke, gebildet ist, durch welche der Puderstrom (144) im freien Fall hindurchgeführt wird und welche dessen Dichte mißt, und daR Mittel (32, 40; 122) zum Erzeugen einer transversalen Relativbewegung zwischen dem frei fallenden Puderstrom (144) und der Meßschranke (36, 38) vorgesehen sind.

2. Bestäubungsgerät nach Anspruch 1, dadurch gekennzeichnet, daß die Mittel zum Erzeugen einer Relativbewegung zwischen dem frei fallenden Puderstrom (144) und der Meßschranke (36, 38) ein flexibles Schlauchstück (32) aufweisen, dessen Abgabeende über der Meßschranke (36, 38) liegt und in zur Achse der Meßschranke senkrechter Richtung bewegbar ist.

3. Bestäubungsgerät nach Anspruch 2, dadurch gekennzeichnet, daß das freie Ende des Schlauchstückes (32) in einem Ring (68) radial geführt ist, der kraftschlüssig mit dem Abtriebsteil eines Stellmotors (40), vorzugsweise dem Anker eines Elektromagneten verbunden ist.

4. Bestäubungsgerät nach Anspruch 2 oder 3, dadurch gekennzeichnet, daß unter dem vom Puderstrom (144) beim Auslenken des flexiblen Schlauchstückes (32) überstrichenen Bereich ein Auffangtrichter (78, 80) vorgesehen ist.

5. Bestäubungsgerät nach Anspruch 4, dadurch gekennzeichnet, daß der Auffangtrichter in Umfangsrichtung aufeinanderfolgend zwei unterschiedlich geneigte Trichterabschnitte (78, 80) hat, wobei der stärker zur Trichterachse geneigte Wandabschnitt (78) unter dem Verstellweg des flexiblen Schlauchstückes (32) liegt.

6. Bestäubungsgerät nach Anspruch 5, dadurch gekennzeichnet, daß der stärker geneigte Wandabschnitt (78) des Auffangtrichters unter einem Winkel von etwa 45° und der schwächer geneigte Wandabschnitt (80) des Auffangtrichters unter einem Winkel von etwa 25° zur Trichterachse geneigt ist.

7. Bestäubungsgerät nach Anspruch 5 oder 6, dadurch gekennzeichnet, daß der stärker geneigte Wandabschnitt (78) des Auffangtrichters über einen balligen Übergangsabschnitt (82) in einen zylindrischen Abschnitt (84) des Auffangtrichters übergeht.

8. Bestäubungsgerät nach Anspruch 1, dadurch gekennzeichnet, daß die Mittel zum Erzeugen einer Relativbewegung zwischen dem freifallenden Puderstrom (144) und der Meßschranke (36, 38) Mittel (122, 138) zum Verlagern der Meßschranke (36, 38) in zur Richtung des Puderstromes (144) senkrechter Richtung aufweisen.

9. Bestäubungsgerät nach Anspruch 8, dadurch gekennzeichnet, daß Sender (36) und Empfänger (38) der Meßschranke in durch ein Nabenteil (128) starr verbundenen Flanschteilen (124, 126) angeordnet sind, die drehbar in einem Meßkammergehäuse (34) gelagert sind.

10. Bestäubungsgerät nach Anspruch 8 oder 9, gekennzeichnet durch einen den freifallenden Puderstrom (144) hinter der Meßschranke (36, 38) entgegennehmenden Auffangtrichter (116).

11. Bestäubungsgerät nach einem der Ansprüche 4 bis 7 oder Anspruch 10, dadurch gekennzeichnet, daß sich an das untere Ende des Auffangtrichters (78, 80; 116) eine Vernebelungskammer (86, 88, 92) der Vernebelungseinrichtung anschließt, die einen sich konisch erweiternden ersten Kammerabschnitt (86), einen gleichbleibenden Querschnitt aufweisenden zweiten Kammerabschnitt (88) sowie einen sich konisch verjüngenden dritten Kammerabschnitt (92) aufweist, und daß unter im wesentlichen konstantem radialem Abstand von den Wänden der Vernebelungskammer in deren Innerem ein Düsenkörper (96) angeordnet ist, dessen unterer konischer Endabschnitt eine mittige axiale Abgabeöffnung (102) für das Nebel-Trägergas aufweist.

12. Bestäubungsgerät nach Anspruch 11, gekennzeichnet durch einen unterhalb der Vernebelungskammer angeordneten Venturieinsatz (108).

13. Bestäubungsgerät nach Anspruch 12, dadurch gekennzeichnet, daß der Venturieinsatz (108) axial verstellbar (110) am Gehäuse der Vernebelungseinrichtung festgelegt ist.

14. Bestäubungsgerät nach Anspruch 12 oder 13, gekennzeichnet durch eine unter dem Venturieinsatz (108) angeordnete Verteileinrichtung (48), in welcher eine Vielzahl von Abgabekanälen (112) ausgebildet ist, die gemeinsam vom stromabseitigen Ende des Venturieinsatzes (108) ausgehen und dann auseinanderlaufen.

15. Bestäubungsgerät nach einem der Ansprüche 1 bis 14, wobei die Dosiereinrichtung eine unter vorgegebenem axialem Abstand unter der Abgabeöffnung des Vorratsbehälters angeordnete, senkrecht zur Achse der Abgabeöffnung mit einstellbarer Amplitude und/oder Frequenz bewegbare Dosierplatte aufweist, gekennzeichnet durch einen Amplituden- und/oder Frequenz-Steuerkreis (156 bis 160), der die Amplitude und/oder Frequenz der Hin- und Herbewegung der Dosierplatte (20) gegensinnig zum Ausgangssignal der Meßschranke (36, 38) ändert.

16. Bestäubungsgerät nach einem der Ansprüche 1 bis 15, gekennzeichnet durch einen der Meßschranke (36, 38) nachgeschalteten steuerbaren Meßverstärker (150) und durch einen Signalspeicher (146), welcher synchron zur Erzeugung der Relativbewegung zwischen Meßschranke (36, 38) und freifallendem Puderstrom (144) aktiviert wird und dessen invertiertes Ausgangssignal auf die Steuerklemme des Meßverstärkers (150) gegeben wird.

17. Bestäubungsgerät nach einem der Ansprüche 1 bis 15, gekennzeichnet durch einen der Meßschranke (36, 38) nachgeschalteten Divisionskreis (152) und durch einen Signalspeicher (146), welcher synchron zur Erzeugung der Relativbewegung zwischen Meßschranke (36, 38) und freifallendem Puderstrom (144) aktiviert wird , wobei die Eingänge des Divisionskreises (152) mit dem Ausgang der Meßschranke (36, 38) bzw. des Signalspeichers (146) verbunden sind.

## Claims

1. Dusting apparatus with a storage container (10) for finely ground powder to be atomized, with a controllable dosing device (18-26), which delivers a powder stream of predetermined volume from the storage container (10), with a powder requirement sensor, whereof the output signal is used for controlling the dosing device (18-26), with an atomization device (42), which distributes the fine particles of the powder stream uniformly in a gaseous carrier stream, and with nozzles (2) for the discharge of the mist produced in this way, towards the objects (56) to be dusted, characterised in that the powder requirement sensor is formed by a measurement gate (36, 38), in particular a light barrier operating by transmission, through which the powder stream (144) is guided in free fall and which measures its density, and that means (32, 40; 122) are provided for producing a transverse relative movement between the free-falling powder stream (144) and the measurement gate (36, 38).

2. Dusting apparatus according to Claim 1, characterised in that the means for producing a relative movement between the free-falling powder stream (144) and the measuring gate (36, 38) comprise a flexible piece of hose (32), whereof the discharge end lies above the measuring gate (36, 38) and can be moved in a direction perpendicular to the axis of the measuring gate.

3. Dusting apparatus according to Claim 2, characterised in that the free end of the piece of hose (32) is guided radially in a ring (68), which is frictionally connected to the output part of a servo motor (40), preferably the armature of a solenoid.

4. Dusting apparatus according to Claim 2 or 3, characterised in that a collecting hopper (78, 80) is provided below the region swept by the powder stream (144) at the time of deflection of the flexible piece of hose (32).

5. Dusting apparatus according to Claim 4, characterised in that in the peripheral direction, the collecting hopper comprises two successive hopper sections (78, 80) having a different inclination, the wall section (78) inclined more steeply with respect to the hopper axis lying below the displacement path of the flexible piece of hose (32).

6. Dusting apparatus according to Claim 5, characterised in that the more steeply inclined wall section (78) of the collecting hopper is inclined at an angle of approximately 45° and the less steeply inclined wall section (80) of the collecting hopper is inclined at an angle of approximately 25° to the axis of the hopper.

7. Dusting apparatus according to Claim 5 or 6, characterised in that the more steeply inclined wall section (78) of the collecting hopper passes by way of a curved transition section (82) into a cylindrical section (84) of the collecting hopper.

8. Dusting apparatus according to Claim 1, characterised in that the means for producing a relative movement between the free-falling powder stream (144) and the measuring gate (36, 38) comprise means (122, 138) for shifting the measuring gate (36, 38) in the direction perpendicular to the direction of the powder stream (144).

9. Dusting apparatus according to Claim 8, characterised in that the transmitter (36) and receiver (38) of the measuring gate are disposed in flange parts (124, 126) rigidly connected by a hub part (128), which parts are mounted to rotate in a measuring chamber housing (34).

10. Dusting apparatus according to Claim 8 or 9, characterised by a collecting hopper (116) receiving the free-falling powder stream (144) behind the measuring gate (36, 38).

11. Dusting apparatus according to one of Claims 4 to 7 or Claim 10, characterised in that adjoining the lower end of the collecting hopper (78, 80; 116) is an atomization chamber (86, 88, 92) of the atomization device, which comprises a first chamber section (86) widening out conically, a second chamber section (88) having a constant cross-section as well as a third chamber section (92) tapering conically, and that located at a substantially constant radial distance from the walls of the atomization chamber, in its interior, is a nozzle member (96), whereof the lower conical end section comprises a central, axial discharge opening (102) for the mist-carrier gas.

12. Dusting apparatus according to Claim 11, characterised by a venturi insert (108) disposed below the atomization chamber.

13. Dusting apparatus according to Claim 12, characterised in that the venturi insert (108) is fixed in an axially adjustable manner (110) to the housing of the atomization device.

14. Dusting apparatus according to Claim 12 or 13, characterised by a distributor device (48) located below the venturi insert (108), in which a plurality of discharge channels (112) is formed, which originate jointly at the downstream end of the venturi insert (108) and then diverge.

15. Dusting apparatus according to one of Claims 1 to 14, the dosing device comprising a dosing plate located at a predetermined axial distance below the discharge opening of the supply container, able to move perpendicularly to the axis of the discharge opening at an adjustable amplitude and/or frequency, characterised by an amplitude and/or frequency control circuit (156 to 160), which varies the amplitude and/or frequency of the reciprocating movement of the dosing plate (20) in the opposite direction to the output signal of the measuring gate (36, 38).

16. Dusting apparatus according to one of Claims 1 to 15, characterised by a controllable measuring amplifier (150) following the measuring gate (36, 38) and by a signal memory (146), which is activated synchronously for producing the relative movement between the measuring gate (36, 38) and free-falling powder stream (144) and whereof the inverted output signal is supplied to the control terminal of the measuring amplifier (150).

17. Dusting apparatus according to one of Claims 1 to 15, characterised by a division circuit (152) following the measuring gate (36, 38) and by a signal memory (146), which is activated synchronously for producing the relative movement between the measuring gate (36, 38) and free-falling powder stream (144), the inputs of the division circuit (152) being connected to the output of the measuring gate (36, 38) or of the signal memory (146).

## Revendications

1. Appareil de saupoudrage comprenant un réservoir de stockage (10) pour de la poudre finement moulue destinée à être saupoudrée, un dispositif de dosage (18-26) à commande variable qui décharge un flux de poudre de taille prédéfinie du réservoir de stockage (10), un capteur de besoin en poudre dont le signal de sortie est utilisé pour commander le dispositif de dosage (18-26), un atomiseur (42) qui répartit uniformément les fines particules du flux de poudre dans un flux porteur gazeux, et des buses (2) pour projeter le brouillard ainsi obtenu vers les objets à saupoudrer (56) caractérisé en ce que le capteur de besoin en poudre est formé par une barrière de mesure (36, 38), notamment par une barrière lumineuse fonctionnant en transmission à travers laquelle passe le flux de poudre (144) tombant librement et qui mesure la densité de ce dernier, et en ce que des moyens (32, 40, 122) sont prévus pour produire un mouvement relatif transversal entre le flux de poudre (144) tombant librement et la barrière de mesure (36, 38).

2. Appareil de saupoudrage selon la revendication 1, caractérisé en ce que les moyens pour produire un mouvement relatif entre le flux de poudre (144) tombant librement et la barrière de mesure (36, 38) présentent une portion de tuyau (32) flexible dont l'extrémité de décharge se situe au-dessus de la barrière de mesure (36, 38) et peut être déplacée perpendiculairement à l'axe de la barrière de mesure.

3. Appareil de saupoudrage selon la revendication 2, caractérisé en ce que l'extrémité libre de la portion de tuyau (32) est guidée de manière radiale dans une bague (68) qui est reliée par adhérence à la partie motrice d'un servomoteur (40), de préférence à l'induit d'un électroaimant.

4. Appareil de saupoudrage selon la revendication 2 ou 3, caractérisé en ce qu'un entonnoir collecteur (78, 80) est prévu sous la zone balayée par le flux de poudre (144) lors de la déviation de la portion de tuyau flexible (32).

5. Appareil de saupoudrage selon la revendication 4, caractérisé en ce que l'entonnoir collecteur présente successivement en direction du pourtour deux portions d'entonnoir (78, 80) inclinées différemment, la portion de paroi (78) plus fortement inclinée par rapport à l'axe de l'entonnoir se situe en dessous du parcours de la portion de tuyau (32) flexible.

6. Appareil de saupoudrage selon la revendication 5, caractérisé en ce que la portion de paroi (78) plus fortement inclinée de l'entonnoir collecteur est inclinée avec un angle d'environ 45° par rapport à l'axe de l'entonnoir et la portion de paroi (80) plus faiblement inclinée de l'entonnoir collecteur, avec un angle d'environ 25° par rapport à l'axe de l'entonnoir.

7. Appareil de saupoudrage selon la revendication 5 ou 6, caractérisé en ce que la portion de paroi (78) plus fortement inclinée de l'entonnoir collecteur se transforme en une portion intermédiaire convexe avant de se transformer en une portion cylindrique (84) de l'entonnoir collecteur.

8. Appareil de saupoudrage selon la revendication 1 caractérisé en ce que les moyens pour produire un mouvement relatif entre le flux de poudre (144) tombant librement et la barrière de mesure (36, 38) présentent des moyens (122, 138) pour déplacer la barrière de mesure (36, 38) perpendiculairement à la direction du flux de poudre (144).

9. Appareil de saupoudrage selon la revendication 8, caractérisé en ce que l'émetteur (36) et le récepteur (38) de la barrière de mesure sont disposés dans des brides (124, 126) reliées rigidement par un moyeu (128) qui sont montées de manière rotative dans un boîtier de chambre de mesure (34).

10. Appareil de saupoudrage selon la revendication 8 ou 9, caractérisé par un entonnoir collecteur (116) recueillant le flux de poudre (144) tombant librement derrière la barrière de mesure (36, 38).

11. Appareil de saupoudrage selon l'une des revendications 4 à 7 ou selon la revendication 10, caractérisé en ce qu'une chambre d'atomisation (86, 88, 92) de l'atomiseur présentant une première portion de chambre (86) s'élargissant de manière conique, une deuxième portion de chambre (88) de section constante et une troisième portion de chambre (92) se rétrécissant de manière conique est raccordée à l'extrémité inférieure de l'entonnoir collecteur (78, 80, 116), et en ce qu'un corps de buse (96) est disposé à l'intérieur de la chambre d'atomisation à une distance radiale essentiellement constante des parois de cette dernière, corps de buse dont la portion terminale conique inférieure présente un orifice de décharge (102) axial central pour le gaz porteur du brouillard.

12. Appareil de saupoudrage selon la revendication 11, caractérisé par un venturi (108) disposé en dessous de la chambre d'atomisation.

13. Appareil de saupoudrage selon la revendication 12, caractérisé en ce que le venturi (108) est fixé sur le boîtier de l'atomiseur de manière à pouvoir être déplacé axialement (110).

14. Appareil de saupoudrage selon la revendication 12 ou 13, caractérisé par un dispositif de répartition (48) disposé sous le venturi (108), dans lequel sont réalisés de nombreux canaux de décharge (112) qui partent tous de l'extrémité du venturi (108) située en aval du flux puis se séparent.

15. Appareil de saupoudrage selon l'une des revendications 1 à 14, dans lequel le dispositif de dosage présente une plaque de dosage disposée à une distance axiale prédéfinie sous l'orifice de décharge du réservoir de stockage et pouvant être déplacée perpendiculairement à l'axe de l'orifice de décharge avec une amplitude et/ou une fréquence réglable, caractérisé par un circuit de commande de l'amplitude et/ou de la fréquence (156 à 160) qui modifie l'amplitude et/ou la fréquence du mouvement de va-et-vient de la plaque de dosage (20) dans le sens inverse par rapport au signal de sortie de la barrière de mesure (36, 38).

16. Appareil de saupoudrage selon l'une des revendications 1 à 15, caractérisé par un amplificateur de mesure (150) à commande variable monté en aval de la barrière de mesure (36, 38) et par une mémoire (146) qui est activée de manière synchrone par rapport à la production du mouvement relatif entre la barrière de mesure (36, 38) et le flux de poudre (144) tombant librement et dont le signal de sortie inverse est transmis à la borne de commande de l'amplificateur de mesure (150).

17. Appareil de saupoudrage selon l'une des revendications 1 à 15, caractérisé par un circuit de division (152) monté en aval de la barrière de mesure (36, 38) et par une mémoire (146) qui est activée de manière synchrone par rapport à la production du mouvement relatif entre la barrière de mesure (36, 38) et le flux de poudre (144) tombant librement, les entrées du circuit de division (152) étant reliées à la sortie de la barrière de mesure (36, 38) ou de la mémoire (146).
